# FASCICULE DE BREVET EUROPEEN

(11) **EP 1 136 010 B1**
(45) Date de publication et mention de la délivrance du brevet: **19.11.2003**
(21) Numéro de dépôt: 00122495.5
(22) Date de dépôt: 14.10.2000
(51) Int. Cl.: A44C 5/02

(54) **Bracelet à maillons notamment pour montre**
Gliederarmband, insbesondere für Uhren
Articulated bracelet, particularly for watches

(30) Priorité: 24.03.2000 EP 00106403
(43) Date de publication de la demande: 26.09.2001
(73) Titulaire: RICHEMONT INTERNATIONAL S.A., 1752 Villars-sur-Glâne (CH)
(72) Inventeur: Cazard, Olivier, 25120 Maiche (FR)
(74) Mandataire: Micheli & Cie

(56) Documents cités:
- CH-A- 537 167
- FR-A- 1 512 427
- FR-A- 2 502 916
- FR-A- 2 567 728

## Description

La présente invention se rapporte à des bracelets à maillons articulés, notamment des bracelets de montre, en acier, en métal précieux ou dans d'autres matériaux. Plus particulièrement la présente invention concerne un bracelet à maillons articulés dans lequel les fonctions mécaniques et esthétiques sont dissociées offrant ainsi une grande liberté à la conception et à l'utilisation dans les choix esthétiques et techniques.

On connaît de tels bracelets des documents EP-0.347.841 et FR-2.502.916 qui décrivent des bracelets comportant des éléments supports assemblés les uns aux autres par des goupilles constituant une chaîne supportant les efforts mécaniques auquel le bracelet est soumis. Cette chaîne d'éléments supports est enfilée dans des éléments de décor comportant un évidement formant une rainure en T dans laquelle viennent se loger les bords des maillons de chaîne ou les extrémités des goupilles assemblant ces maillons de chaîne.

Un tel assemblage n'est pas satisfaisant car la position de chaque élément de support n'est pas définie par rapport à un élément de décor correspondant. Ceci peut provoquer des coincements car rien n'assure que les articulations des maillons de chaînes les uns sur les autres coïncide avec le plan transversal passant entre deux éléments de décor. De plus il y a forcément du jeu entre les maillons de chaîne et les éléments de décor ce qui nuit au bon fonctionnement du bracelet. Enfin ce jeu va en augmentant au fur et à mesure de l'utilisation et donc de l'usure du bracelet ce qui finit par altérer son fonctionnement.

On connaît encore un tel bracelet du document EP-0.196.996 qui malheureusement présente également les inconvénients décrits ci-dessus et dont les éléments de décor sont en deux parties soudées après que les maillons de chaîne aient été placés en position de service. Ceci implique une soudure sur chaque élément de décor puis un polissage, opérations longues et coûteuses.

On connaît encore des bracelets chaîne du document EP-0.549.979 qui présentent une chaîne de maillons de support articulés les uns aux autres et disposés à l'intérieur d'une succession de maillons de décor de forme tubulaire. Dans cette réalisation, des éléments de blocage relient chaque élément de décor à un élément de support correspondant. Ceci évite qu'il se produise un déplacement longitudinal des éléments de support par rapport aux éléments de décor mais n'évite pas le jeu entre ces éléments. De plus la réalisation d'un tel bracelet est complexe, l'usinage des pièces étant compliqué de même que leur montage.

Enfin la titulaire a déjà proposé un bracelet chaîne dans le document EP-0.868.863 où chaque élément support est logé dans un évidement usiné dans un élément de décor correspondant et/ou les éléments de décor successifs s'emboîtent les uns dans les autres par des portions semi-cylindriques convexes respectivement concaves. Sur le plan du fonctionnement, un tel bracelet est supérieur aux précédents car le positionnement relatif de ces éléments est assuré tant longitudinalement que transversalement. Par contre ce bracelet est complexe à réaliser du fait de l'usinage compliqué des maillons de la chaîne et des éléments de décor. De plus le montage de ce bracelet doit se faire élément après élément de proche en proche.

Le but de la présente invention est de proposer un bracelet à maillons articulés, notamment pour montres, qui comporte une chaîne d'éléments de support articulés les uns aux autres et des éléments de décor permettant de dissocier les fonctions mécaniques et esthétiques du bracelet. De plus il faut également qu'il n'y ait pas de jeu entre les éléments de support et les éléments de décor correspondant. Il faut en outre que chaque élément de décor soit positionné positivement et avec précision sur l'élément de support correspondant. Enfin il faut encore que la fabrication, le montage et le service après-vente du bracelet soient simples et aisés et pour cela il faut que les usinages des différentes pièces soient faciles, que leur assemblage soit simple et facile et que le nombre de pièces nécessaire soit le plus faible possible.

La présente invention a pour objet un bracelet à maillons articulés du type précité qui obvie aux inconvénients des bracelets existants et qui permette d'atteindre tous les buts énoncés précédemment. Ce bracelet comporte une chaîne d'éléments de support articulés les uns aux autres, et des éléments de décor montés sur cette chaîne, et se distingue par les caractéristiques énoncées à la revendication 1.

Le dessin annexé illustre schématiquement et à titre d'exemple deux formes d'exécution du bracelet selon l'invention.
La figure 1 illustre les éléments d'une première forme d'exécution du bracelet avant montage depuis dessus.
La figure 2 illustre les éléments du bracelet avant montage depuis dessous.

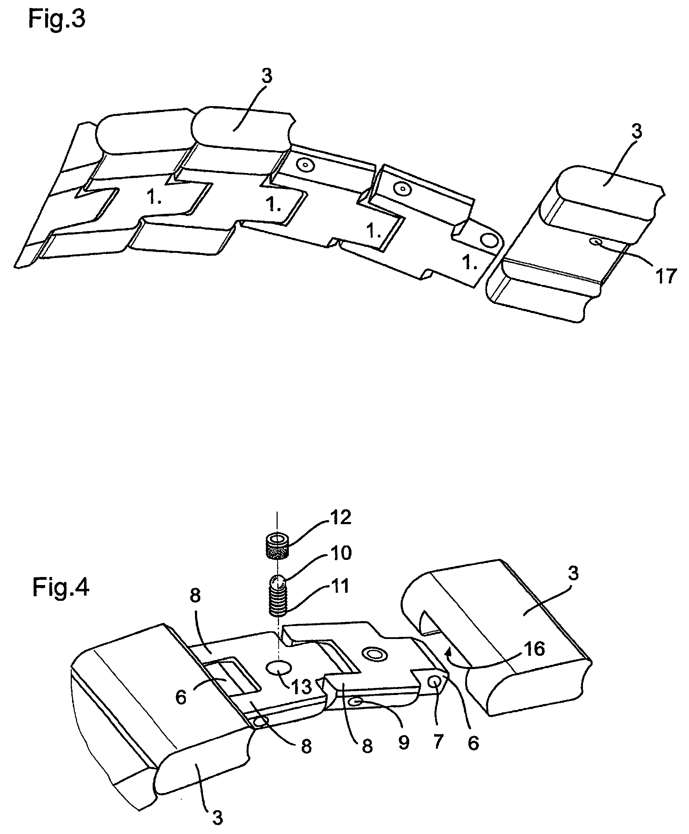

La figure 3 illustre en perspective, vu de dessous, une portion du bracelet.
La figure 4 illustre en perspective, vu de dessus une portion du bracelet.
La figure 5 illustre en perspective, vu de dessous, une exécution possible d'un maillon d'extrémité avec la chaîne.
La figure 6 est une vue en perspective éclatée de dessus partielle et à plus grande échelle d'une seconde forme d'exécution du bracelet.
La figure 7 est une vue en perspective éclatée de dessous partielle et à plus grande échelle de la seconde forme d'exécution du bracelet.

Le bracelet illustré est composé d'éléments de support 1 qui, une fois assemblés par des goupilles 2, constituera la chaîne du bracelet supportant les efforts mécaniques et permettant l'adaptation de la forme du bracelet à celle du poignet. Ce bracelet comporte encore des éléments de décor 3 qui s'enfilent sur la chaîne assemblée entièrement ou non et se positionnent chacun par rapport à un élément de support 1.

Le bracelet comporte encore deux maillons d'extrémité 4,5 fixés aux éléments support d'extrémité 1a, 1b de la chaîne qu'ils forment, et qui sont destinés à être fixés de façon connue, dans le cas d'un bracelet pour montres, sur la boîte d'une montre ou sur un fermoir.

Chaque élément support 1 constituant la chaîne du bracelet comporte un corps muni sur sa face avant d'une projection 6 percée d'un trou transversal 7 venant en position de service s'imbriquer entre deux extensions 8 de la face arrière de l'élément de support adjacent, extensions 8 également percées de passages transversaux 9.

Les faces supérieures et inférieures de ces éléments de support 1 peuvent être planes et parallèles. La face supérieure comporte un logement 13 recevant une bille 10 soumise à l'action d'un ressort 11 et maintenue en place par un chapeau 12, le tout formant une butée à bille rétractable. Les faces latérales ou côtés des éléments de support 1 sont inclinés donnant ainsi au corps de cet élément de support 1 la forme générale d'une queue d'aronde en coupe transversale.

Les éléments de support 1 sont juxtaposés puis assemblés à l'aide de goupilles 2 traversant les passages 9 des extensions arrières d'un élément et le passage 7 de la projection avant 6 d'un élément voisin. Les goupilles 2 ne peuvent pas s'échapper puisqu'elles sont emprisonnées latéralement entre les parois des éléments de décor 3. La chaîne ainsi constituée est robuste, formée d'éléments de forme simple.

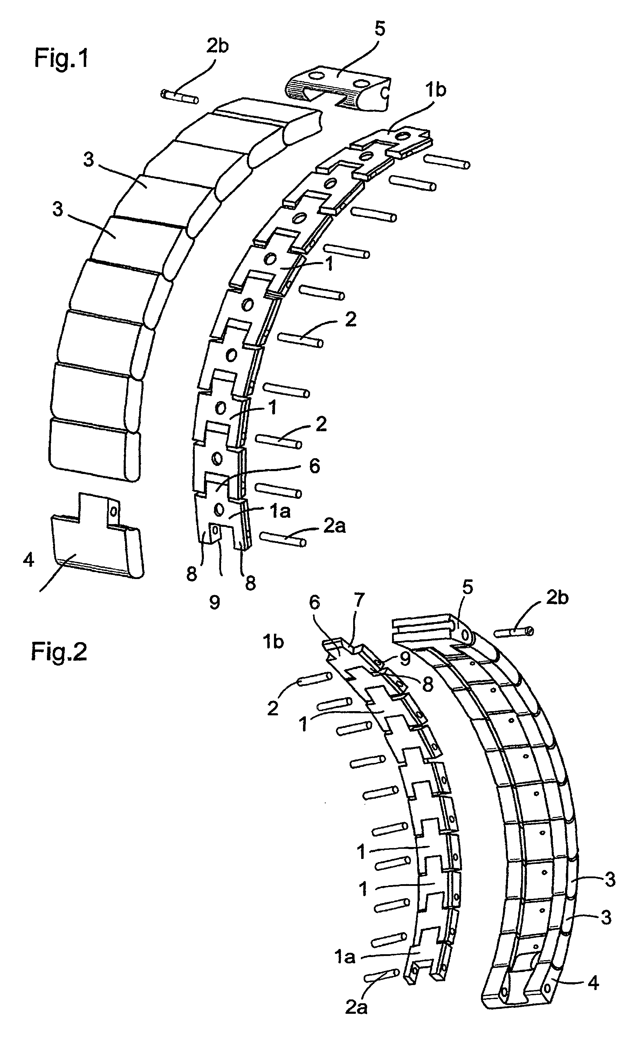

Dans l'exécution présentée figures 1 et 2, le premier élément de support 1 a de cette chaîne est relié à l'aide d'une goupille 2a à l'élément de décor d'extrémité 4 qui comporte une projection avant 14 munie d'un passage transversal 15 venant se placer entre les deux extensions arrières 8 de cet élément 1 a. L'élément de décor d'extrémité 4 présente une forme extérieure semblable aux autres éléments de décor 3 et comporte des moyens sur sa tranche libre permettant de le fixer sur une boîte de montre ou un fermoir de façon conventionnelle.

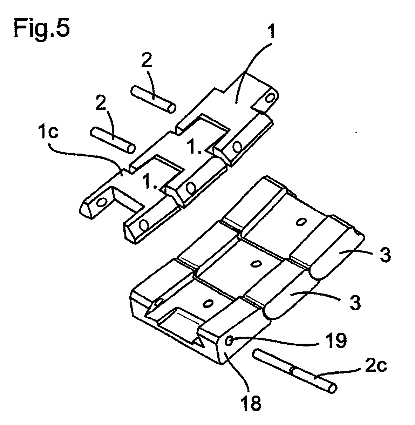

Dans l'exécution présentée figure 5, le premier élément de support 1c de cette chaîne est relié à l'aide d'une goupille 2c à l'élément de décor d'extrémité 18 qui comporte un perçage 19 pour le passage de la goupille 2c. Cette goupille 2c peut également être utilisée pour la fixation d'un fermoir de façon conventionnelle. L'élément de décor d'extrémité 18 présente une forme extérieure semblable aux autres éléments de décor 3. Sa forme intérieure, qui sera décrite plus loin, est également semblable aux autres éléments de décor 3.

Les éléments de décor 3 comportent un évidement 16 débouchant sur les faces inférieures et les tranches avant et arrière. Les parois latérales de cet évidement 16 sont inclinées de manière à ce qu'il rétrécisse en direction de la face inférieure de l'élément de décor. Ainsi cet évidement comporte en section transversale la forme générale d'une queue d'aronde correspondant à la section transversale des éléments supports 1.

Le fond de l'évidement 16 comporte une creusure 17 coopérant avec la bille 10 de la butée à bille d'un élément de support 1 permettant de fixer la position longitudinale de chaque élément support 1 par rapport à un élément de décor 3 correspondant. De plus cette butée à bille tend à déplacer l'élément de support 1 vers la face inférieure de l'élément de décor 3 correspondant. Ce faisant, les faces latérales de l'élément de support 1 viennent s'appliquer contre les faces latérales de l'évidement 16 de l'élément de décor 3. Ainsi, en position de service, la position d'un élément de support 1 par rapport à l'élément de décor correspondant 3 est assurée et fixée positivement en hauteur, transversalement et longitudinalement éliminant ainsi tout jeu entre ces éléments 1 et 3.

Dans l'exemple illustré, les faces avant et arrière des éléments de décor 3 présentent des portions semi-cylindriques concaves respectivement convexes coopérant avec la formation correspondante d'un élément voisin. La position assemblée d'un élément de support par rapport à l'élément de décor correspondant étant maintenue par la butée à bille et la creusure 17 dans les cas habituels où les efforts extérieurs sont faibles, et par les surfaces des tranches avant et arrière des éléments de décor dans les cas où les efforts extérieurs sont importants.

Lorsque les éléments de support 1 sont assemblés, entièrement ou non, et articulés les uns sur les autres à l'aide des goupilles 2 et que l'élément d'extrémité 1a (ou 1c) est articulé sur l'élément de décor d'extrémité 4 (ou 18) à l'aide de la goupille 2a ou 2c, on enfile les éléments de décor 3 sur la chaîne ainsi réalisée, chaque élément de décor se positionnant exactement et sans jeu sur un élément de support. Lorsque la longueur voulue est atteinte le dernier élément de support 1b est accouplé et articulé, par exemple à l'aide d'une goupille composée 2b sur l'élément de décor d'extrémité 5. L'ensemble ainsi constitué est ainsi verrouillé.

Dans une telle construction la forme des éléments de support et de décor est simple, facile à usiner, chaque élément de support est positionné individuellement par rapport à un élément de décor et tout jeu entre ces éléments est compensé ou annulé. De plus l'ensemble terminé est verrouillé.

Dans des variantes, la butée à bille peut-être remplacée par toute autre butée ou dispositif qui permette simultanément de fixer la position longitudinale des éléments de support 1 par rapport à l'élément de décor 3 correspondant et à supprimer tout jeu entre ces éléments, fixant ainsi simultanément l'élément de support dans l'élément de décor en position de service défini tant en hauteur, transversalement que longitudinalement. La butée à bille peut par exemple être remplacée par une butée constituée par une vis, l'extrémité de la vis coopérant avec la creusure 17 et le serrage de la vis éliminant les jeux entre les éléments. La bille 10 peut également être sertie dans l'élément de support 1, ce qui permet de supprimer le chapeau 12.

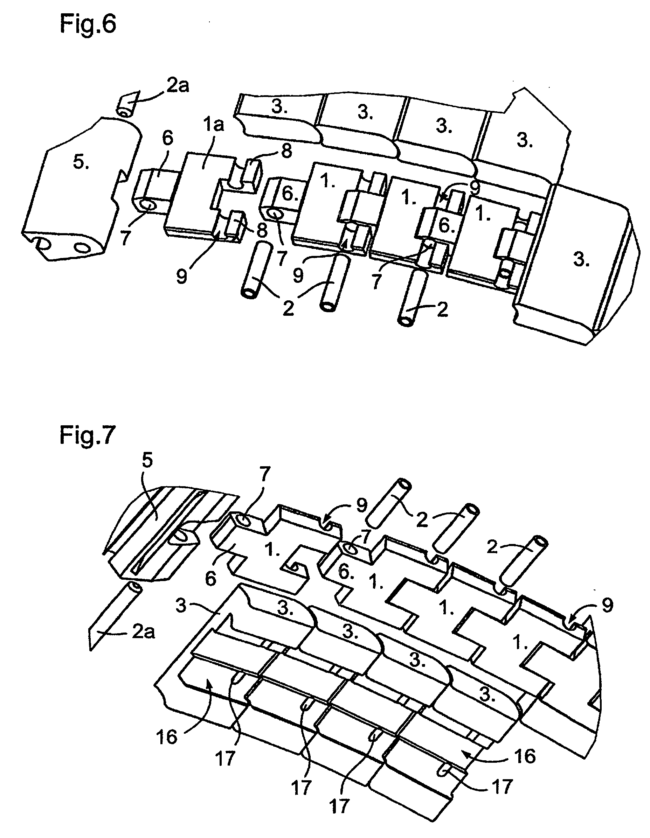

La seconde forme d'exécution du bracelet illustrée à la figure 6 diffère de celle déjà décrite par la réalisation du dispositif de positionnement fixant les positions en hauteur, longitudinale et transversale de chaque élément de décor sur l'élément de support correspondant.

Dans cette seconde forme d'exécution, les passages 9 des extensions arrières 8 des éléments de support 1 débouchent sur la surface supérieure des éléments de support. Ainsi, lorsque la goupille 2 reliant et articulant deux éléments de support 1 adjacents est en position d'assemblage une portion de sa surface cylindrique émerge hors de la surface supérieure de l'élément de support 1.

Dans cette seconde forme d'exécution, la face inférieure du fond de l'évidement 16 des éléments de décor 3 comporte une creusure allongée 17 de forme générale cylindrique ou en V destinée à coopérer avec la portion de surface libre des goupilles 2.

Ainsi, en position assemblée, chaque élément de décor 3 est indexé sur un élément de support 1 par la goupille 2 coopérant avec la creusure 17 maintenant la position transversale relative de ces deux éléments 1,3. De plus, la goupille 2 est serrée et déformée élastiquement entre un élément de support 1 et le fond de l'évidement 16 ce qui tend à écarter ces éléments. Du fait des côtés latéraux en forme de queue d'aronde ceci élimine tout jeu entre les éléments de décor 3 et les éléments de support 1 et déterminent leur position en hauteur ainsi que leur position transversale respective.

Dans cette forme d'exécution, on obtient le même résultat qu'avec la butée à bille de la première forme d'exécution mais de façon plus simple puisque c'est la goupille 2 qui remplace cette butée à bille.

De préférence, la goupille 2 est tubulaire pour en augmenter l'élasticité.

Dans une variante, on utilise même des goupilles 2 tubulaires ou non, réalisées en un matériau à mémoire de forme dont les caractéristiques de grande élasticité sont avantageuses pour cette application.

Ce nouveau concept offre de nombreux avantages esthétiques, techniques et économiques.

A la conception du produit comme à son utilisation, une grande liberté est donnée dans le choix de la forme, de la couleur et du matériau des maillons 3. Différents maillons 3 peuvent être assemblés sur la même chaîne et échangés. Les matériaux peuvent être choisis en fonction de leurs aptitudes à satisfaire les exigences du concepteur et de l'utilisateur (par exemple: bonne résistance aux rayures pour les maillons 3).
La fabrication, l'assemblage et le contrôle du produit sont simplifiés:
- La chaîne peut être produite en grande quantité car elle est commune à plusieurs modèles. C'est un composant "banal", sans contenu technique ou esthétique, qui peut être produit et assemblé indépendamment du bracelet.
- Les composants ont une géométrie simple en ce qui concerne les parties fonctionnelles (la géométrie de la forme extérieure des maillons 3 dépend de l'esthétique). Les tolérances sont larges, notamment grâce au système de mise en position qui permet de supprimer les jeux. Ces tolérances larges permettent d'envisager différents procédés de fabrication.
- Fréquemment, les bracelets sont assemblés au moyen de vis et de goupilles chassées. Cette conception traditionnelle présente de nombreux inconvénients tels que la réalisation d'usinages de grande précision et de petites dimensions notamment pour garantir un chassage correct des goupilles; l'utilisation de colle pour assurer la tenue des vis entraînant des complications d'assemblage; les difficultés de contrôle de la tenue des vis et des goupilles; ou le fait que les assemblages soient partiellement indémontables. Le nouveau concept proposé supprime les alésages et les taraudages dans les maillons 3. Dans les éléments de chaîne 1, la profondeur des perçages est réduite car la largeur de la chaîne est inférieure à celle du bracelet.
- Au montage et à la mise en longueur, le positionnement des maillons 3 sur la chaîne est automatique et indépendant de la précision de la forme extérieure des maillons. Le système de mise en position permet de prévoir des jeux suffisants qui facilitent l'assemblage.
- Les articulations ne sont pas visibles, ce qui améliore l'esthétique et facilite le polissage.
La durabilité du produit est améliorée:
- La limitation de la rotation de la chaîne est assurée par la forme des éléments support 1 eux-mêmes et non par des surfaces des maillons 3 décoratifs. Les efforts sur les maillons décoratifs sont transmis aux autres maillons et à la chaîne formée par les éléments support par des surfaces de grandes dimensions.
- Une dégradation de la chaîne (par exemple la rupture d'une goupille) est sans conséquence pour les maillons décoratifs et inversement.
Le service après-vente est simplifié:
- Les maillons décoratifs 3 et les éléments support 1 peuvent être remplacés individuellement.
- Le montage et le démontage sont réalisés facilement et sans outils. L'absence de vis et de goupilles chassées simplifie la mise à longueur qui est généralisée à l'ensemble du bracelet.
- Les maillons décoratifs 3, pour un modèle de bracelet droit, sont tous identiques (il n'y a pas de maillon de rallonge spécifique pour la mise en longueur).
- Plusieurs éléments sont standard.

Dans une forme d'exécution avantageuse, les goupilles 2 peuvent être réalisées par des tubes, ce qui augmente leur élasticité et permet de ce fait une plus grande compensation des jeux entre les éléments support 1 et de décor 3. Ces goupilles 2 tubulaires ou pleines peuvent être réalisées en un alliage à mémoire de forme qui possède la propriété de pseudo-élasticité permettant une grande amplitude de déplacement induit par la déformation élastique.

Dans un tel bracelet, le nombre de pièces est réduit au maximum puisque le rattrapage de jeu entre les éléments de décor 3 et de support 1 est obtenu grâce aux goupilles 2 accouplant les éléments support 1 de la chaîne.

## Revendications

1. Bracelet à maillons, notamment pour montres, comportant des éléments de support (1) articulés les uns aux autres pour former une chaîne et des éléments de décor (3) montés sur ladite chaîne, **caractérisé par le fait que** les éléments de décor (3), ou maillons sont indépendants les uns des autres et comportent un évidement (16) présentant en coupe transversale la forme générale d'une queue d'aronde débouchant sur ses tranches avant et arrière ainsi que sur sa face inférieure, **par le fait que** les éléments de support (1) présentent en coupe transversale une forme générale de queue d'aronde correspondant à celle des évidements (16) des éléments de décor (3); et **par le fait que** la position en hauteur, longitudinale et transversale d'un élément support (1) sur ou dans un élément de décor (3) est fixée à l'aide d'un dispositif de positionnement (10,11,12,13,17) fixant les positions longitudinales relatives de ces éléments (1,3) et éliminant tout jeu entre eux.

2. Bracelet selon la revendication 1, **caractérisé par le fait que** le dispositif de fixation comporte une butée à bille (10,11,12) émergeant hors de la surface supérieure des éléments de support (1) et coopérant avec une creusure (17) formée dans le fond de l'évidement (16) d'un élément de décor.

3. Bracelet selon la revendication 1 ou la revendication 2, **caractérisé par le fait que** le dispositif de fixation est formé par une vis vissée dans un taraudage traversant un élément de support (1), la pointe de la vis coopérant avec une creusure (17) pratiquée dans le fond de l'évidement (16).

4. Bracelet selon l'une des revendications précédentes, **caractérisé par le fait que** les éléments de support (1) formant la chaîne sont assemblés et articulés à l'aide de goupilles libres (2).

5. Bracelet selon l'une des revendications précédentes, **caractérisé par le fait que** l'élément de support d'extrémité (1b) est articulé à l'aide d'une goupille composée 2b sur un élément de décor d'extrémité (5).

6. Bracelet selon l'une des revendications 1 à 4, **caractérisé par le fait que** l'élément de support d'extrémité (1c) est articulé à l'aide d'une goupille (2c) à l'élément de décor d'extrémité (18) qui comporte un perçage (19) pour le passage de la goupille (2c).

7. Bracelet selon la revendication 2, **caractérisé par le fait que** la bille est sertie dans l'élément support.

8. Bracelet selon la revendication 1, **caractérisé par le fait que** le dispositif comporte une empreinte (17) dans la surface formant le fond de l'évidement (16) des mailles (3) coopèrent avec des portions de surface d'une goupille (2) reliant deux éléments support (1) adjacents.

9. Bracelet selon la revendication 8, **caractérisé par le fait que** des extensions arrières (8) des éléments support (1) présentent des passages (8) ouverts sur leur face supérieure dans lesquels les goupilles (2) sont partiellement logées.

10. Bracelet selon l'une des revendications 8 ou 9, **caractérisé par le fait que** les goupilles (2) sont tubulaires.

11. Bracelet selon l'une des revendications 8 à 10, **caractérisé par le fait que** les goupilles (2) sont en un matériau à mémoire de forme présentant la caractéristique de grande élasticité.

## Patentansprüche

1. Gliederarmband, insbesondere für Uhren, mit Stützelementen (1), die gelenkig aneinander befestigt sind, um eine Kette zu bilden, sowie mit Schmuckelementen (3), die auf diese Kette montiert sind, **dadurch gekennzeichnet, dass** die Schmuckelemente (3) oder Kettenglieder voneinander unabhängig sind und eine Aussparung (16) haben, die im Querschnitt die allgemeine Form eines Schwalbenschwanzes aufweist und an ihren Kanten nach vom und hinten sowie an ihrer Unterseite offen ist, dadurch, dass die Stützelemente (1) im Querschnitt die allgemeine Form eines Schwalbenschwanzes aufweisen, die der Form der Aussparungen (16) der Schmuckelemente (3) entspricht; und dadurch, dass die Höhen-, Längs- und Querlage eines Stützelements (1) auf oder in einem Schmuckelement (3) mit Hilfe einer Positioniervorrichtung (10, 11, 12, 13, 17) fixiert wird, die diese Elemente (1, 3) in ihrer Längsposition zueinander fixiert und jedes Spiel zwischen ihnen ausschliesst.

2. Armband nach Anspruch 1, **dadurch gekennzeichnet, dass** die Fixiervorrichtung ein Axialkugellager (10, 11, 12) umfasst, das aus der Oberseite der Stützelemente (1) hervorsteht und mit einer Vertiefung (17) zusammenwirkt, die im Boden der Aussparung (16) eines Schmuckelements ausgebildet ist.

3. Armband nach Anspruch 1 oder Anspruch 2, **dadurch gekennzeichnet, dass** die Fixiervorrichtung durch eine Schraube gebildet wird, die in ein Innengewinde eingeschraubt ist, das durch ein Stützelement (1) führt, wobei die Spitze der Schraube mit einer Vertiefung (17) zusammenwirkt, die im Boden der Aussparung (16) angebracht ist.

4. Armband nach einem der vorangehenden Ansprüche, **dadurch gekennzeichnet, dass** die Stützelemente (1), die die Kette bilden, mit Hilfe von losen Stiften (2) zusammengesetzt und gelenkig verbunden werden.

5. Armband nach einem der vorangehenden Ansprüche, **dadurch gekennzeichnet, dass** das endständige Stützelement (1b) mit Hilfe eines zusammengesetzten Stiftes (2b) an einem endständigen Schmuckelement (5) gelenkig befestigt wird.

6. Armband nach einem der Ansprüche 1 bis 4, **dadurch gekennzeichnet, dass** das endständige Stützelement (1c) mit Hilfe eines Stiftes (2c) gelenkig an einem endständigen Schmuckelement (18) befestigt wird, das eine Bohrung (19) hat, um den Stift (2c) durchzulassen.

7. Armband nach Anspruch 2, **dadurch gekennzeichnet, dass** die Kugel in ein Stützelement eingelassen ist.

8. Armband nach Anspruch 1, **dadurch gekennzeichnet, dass** die Vorrichtung eine Spur (17) in der Oberfläche hat, die den Boden der Aussparung (16) der Glieder (3) bildet und mit Abschnitten der Oberfläche eines Stiftes (2) zusammenwirkt, der zwei benachbarte Stützelemente (1) verbindet.

9. Armband nach Anspruch 8, **dadurch gekennzeichnet, dass** die rückwärtigen Verlängerungen (8) der Stützelemente (1) auf ihrer Oberseite offene Durchgänge (8) aufweisen, in denen die Stifte (2) teilweise Aufnahme finden.

10. Armband nach einem der Ansprüche 8 oder 9, **dadurch gekennzeichnet, dass** die Stifte (2) röhrenförmig sind.

11. Armband nach einem der Ansprüche 8 bis 10, **dadurch gekennzeichnet, dass** die Stifte (2) aus einem Formgedächtniswerkstoff bestehen, der eine grosse Elastizität besitzt.

## Claims

1. Articulated bracelet, particularly for watches, with support elements (1) mutually articulated to form a chain, and with ornamental elements (3) mounted on this chain, **characterized in that** the ornamental elements (3) or chain links are mutually independent and have a hollow (16) which in cross section has the general shape of a dovetail open at its forward and rear edges as well as at its underside, **in that** the support elements (1) in cross section have the general shape of a dovetail corresponding to that of the hollows (16) of the ornamental elements (3); and **in that** the elevational, longitudinal, and transverse positions of a support element (1) on or in an ornamental element (3) are fixed with the aid of a positioning device (10, 11, 12, 13, 17) fixing the relative longitudinal positions of these elements (1, 3) while eleminating all play between them.

2. Bracelet according to claim 1, **characterized in that** the fixing device comprises a ball thrust bearing (10, 11, 12) emerging from the top surface of the support elements (1) and cooperating with a recess (17) formed in the bottom of hollow (16) of an ornamental element.

3. Bracelet according to claim 1 or claim 2, **characterized in that** the fixing device is formed by a screw screwed into a threading traversing a support element (1), the tip of the screw cooperating with a recess (17) cut into the bottom of hollow (16).

4. Bracelet according to one of the preceding claims, **characterized in that** the support elements (1) forming the chain are assembled and articulated with the aid of loose pins (2).

5. Bracelet according to one of the preceding claims, **characterized in that** the terminal support element (1b) is articulated at a terminal ornamental element (5) with the aid of a composite pin (2b).

6. Bracelet according to one of the claims 1 to 4, **characterized in that** the terminal support element (1c) is articulated with the aid of a pin (2c) at a terminal ornamental element (18) having a bore (19) admitting the pin (2c).

7. Bracelet according to claim 2, **characterized in that** the ball is set in a support element.

8. Bracelet according to claim 1, **characterized in that** the device comprises a track (17) in the surface forming the bottom of hollow (16) of the chain links (3) and cooperating with surface portions of a pin (2) linking two adjacent support elements (1).

9. Bracelet according to claim 8, **characterized in that** the rear extensions (8) of the support elements (1) have open passages (8) on their top surface into which the pins (2) are taken up in part.

10. Bracelet according to one of claims 8 or 9, **characterized in that** the pins (2) are tubular.

11. Bracelet according to one of claims 8 to 10, **characterized in that** the pins (2) are made of a shape memory material having large elasticity.
